(19) Europäisches Patentamt
European Patent Office
Office européen des brevets

(11) Veröffentlichungsnummer : **0 122 447 B1**

(12) **EUROPÄISCHE PATENTSCHRIFT**

(45) Veröffentlichungstag der Patentschrift : **05.03.86**

(51) Int. Cl.⁴ : **C 09 B 35/18**// D06P1/18

(21) Anmeldenummer : **84102631.3**

(22) Anmeldetag : **10.03.84**

(54) **Disazofarbstoffe.**

(30) Priorität : **18.03.83 DE 3309718**

(43) Veröffentlichungstag der Anmeldung : **24.10.84 Patentblatt 84/43**

(45) Bekanntmachung des Hinweises auf die Patenterteilung : **05.03.86 Patentblatt 86/10**

(84) Benannte Vertragsstaaten : **CH DE FR GB IT LI**

(56) Entgegenhaltungen :
**FR-A- 1 338 191**
**FR-A- 2 003 037**
**FR-A- 2 025 723**
**FR-A- 2 305 472**

(73) Patentinhaber : **BASF Aktiengesellschaft**
**Carl-Bosch-Strasse 38**
**D-6700 Ludwigshafen (DE)**

(72) Erfinder : **Kemper, Reinhard, Dr.**
**Viernheimer Weg 41**
**D-6900 Heidelberg (DE)**
Erfinder : **Liedek, Egon, Dr.**
**Holunderweg 16**
**D-7300 Esslingen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 122 447 B1

**Beschreibung**

Die Erfindung betrifft Verbindungen der allgemeinen Formel I

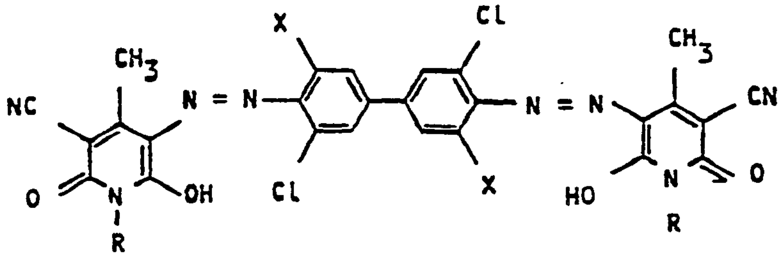

(I)

in der R Wasserstoff oder $C_1$- bis $C_6$-Alkyl und X Chlor oder Brom mit der Maßgabe sind, daß wenn R = H, X nur Br ist.

Vorzugsweise ist R Wasserstoff, wenn X = Br ist.

Bevorzugt ist auch die Verbindung mit R = $CH_3$ und X = Cl.

Eine vergleichbare Verbindung ist aus der DE-OS 25 13 578 bekannt. Demgegenüber zeichnen sich die nächst-vergleichbaren erfindungsgemäßen Verbindungen überraschenderweise durch bessere Lichtechtheit (geringeres Nachdunkeln) und bessere Temperaturstabilität in Kunststoffen aus.

Zur Herstellung der Verbindungen der Formel I kann man eine Tetrazoniumverbindung des 3,3'-Dihalogen-5,5'-dichlorbenzidins mit Pyridonen der Formel

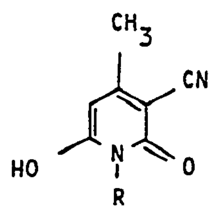

nach an sich bekannten Methoden umsetzen.

Die Verbindungen der Formel I haben Pigmenteigenschaften und zeichnen sich durch hohe Farbstärke, Brillanz und sehr gute Echtheiten aus.

Die Pigmente können je nach den Herstellungsbedingungen in einer transparenten oder deckenden Form erhalten werden. Sie eignen sich zur Verwendung in Druckfarben und Kunststoffen, wie Polyolefinen, PVC oder Polyestern sowie für die Spinnfärbung.

In den folgenden Beispielen beziehen sich Angaben über Teile und Prozente, sofern nicht anders vermerkt, auf das Gewicht.

Beispiel 1

21,2 Teile 3,3'-Dibrom-5,5'-dichlorbenzidin werden bei 20 bis 50 °C in 100 Teilen 96 %ige Schwefelsäure eingetragen und dann 30 Minuten bei 50 °C gerührt. Nach der Abkühlung auf 5 bis 10 °C wird die Mischung mit 34,5 Teilen 40 %iger Nitrosylschwefelsäure versetzt und 2 Stunden bei 5 bis 10 °C gehalten. Man trägt dann auf 500 Teile Eiswasser aus, gibt 1 Teil Amidosulfonsäure zu und filtriert. Das Filtrat läßt man in eine Lösung von 15,5 Teilen 2,6-Dihydroxy-3-cyan-4-methylpyridin in 320 Teilen Wasser und 4,2 Teilen Natriumhydroxid einlaufen. Nachdem die Mischung ausgekuppelt hat, wird 1 Stunde auf 60 °C erwärmt, abgesaugt und mit warmem Wasser neutral gewaschen. Nach dem Trocknen erhält man 36,7 Teile eines brillanten, roten, transparenten Pigments der Formel I mit R = H. Fp : 360 °C.

Beispiel 2

100 Teile eines nach Beispiel 1 erhaltenen feuchten Preßkuchens (Trockengehalt = 25 %) werden in 500 Teile Wasser eingetragen. Bei 25 °C wird mit 40 Teilen einer 10 %igen alkalischen Kolophoniumlösung versetzt. Nachdem mit 10 %iger Salzsäure ein pH von 3 eingestellt ist, wird 2 Stunden bei 25 °C gerührt. Danach wird das Pigment abfiltriert, gewaschen und getrocknet. Es unterscheidet sich von dem nach Beispiel 1 erhaltenen Pigment durch deutlich bessere Dispergierbarkeit.

Beispiel 3

100 Teile eines nach Beispiel 1 erhaltenen feuchten Preßkuchens (Trockengehalt = 25 %) werden in 500 Teile Wasser eingetragen. Man rührt 8 Stunden bei 96 bis 98 °C und kühlt auf 50 °C ab, danach wird

die Verbindung abgesaugt, gewaschen und getrocknet. Man erhält das Pigment in einer deckenderen Form als gemäß Beispiel 1.

Beispiel 4

Eine nach Beispiel 1 aus 21,2 Teilen 3,3'-Dibrom-5,5'-dichlorbenzidin erhaltene Tetrazolösung wird zu einer Lösung aus 17 Teilen 2,6-Dihydroxy-3-cyan-1,4-dimethylpyridin in 300 Teilen Wasser und 4,2 Teilen Natriumhydroxid gegeben. Nach 2 Stunden bei 20 °C wird 1 Stunde auf 60 °C erwärmt, abgesaugt und mit warmem Wasser gewaschen. Nach der Trocknung erhält man 38 Teile eines roten Pigments der Formel I mit R = $CH_3$. Fp. : > 360 °C.

Beispiel 5

Eine nach Beispiel 1 aus 21,2 Teilen 3,3'-Dibrom-5,5'-dichlorbenzidin erhaltene Tetrazolösung wird zu einer Lösung aus 21,3 Teilen 1-Butyl-2,6-dihydroxy-3-cyan-4-methylpyridin in 300 Teilen Wasser und 4,2 Teilen Natriumhydroxid gegeben. Nach 2 Stunden bei 20 °C wird 1 Stunde auf 60 °C erwärmt, abgesaugt und mit warmem Wasser gewaschen. Nach der Trocknung erhält man 42,1 Teile eines brillanten, roten Pigments der Formel I mit R = $C_4H_9$. Fp. : 295 °C.

Beispiel 6

Eine nach Beispiel 1 aus 21,2 Teilen 3,3'-Dibrom-5,5'-dichlorbenzidin erhaltene Tetrazolösung wird zu einer Lösung aus 24,2 Teilen 1-n-hexyl-2,6-dihydroxy-3-cyan-4-methylpyridin in 300 Teilen Wasser und 4 Teilen Natriumhydroxid gegeben. Nach 2 Stunden bei 20 °C wird 1 Stunde auf 60 °C erwärmt, abgesaugt und mit warmem Wasser gewaschen. Nach der Trocknung erhält man 43 Teile eines roten Pigments der Formel I mit R = $C_6H_{13}$. [Fp. : 265 °C, UV (konz. $H_2SO_4$) : $_{max}$ = 517 nm (= 81.000)].

Beispiel 7

16,1 Teile 3,3',5,5'-Tetrachlorbenzidin werden bei 20 °C in eine Mischung aus 295 Teilen konz. Schwefelsäure und 35 Teilen Nitrosylschwefelsäure (40 %ig) eingetragen, bis zur vollständigen Lösung auf 50 °C erwärmt und 2 Std. nachgerührt, wobei die Temperatur auf 25 °C absinkt. Bei dieser Temperatur wird die Lösung in 1165 Teile Eiswasser eingetragen, mit 1 Teil Amidosulfonsäure versetzt und 15 Min. nachgerührt.

Die klare Tetrazolösung wird bei 20 °C in eine Aufschlämmung von 17,1 Teilen 1,4-Dimethyl-3-cyan-6-hydroxypyridon (2) in 400 Teilen Wasser, 13 Teilen konz. Schwefelsäure und 1 Teil eines oxethylierten Ölsäureesters eingetropft.

Nach beendeter Kupplung wird die Pigmentsuspension aufgekocht, nach dem Abkühlen auf 40 °C abgesaugt und der Preßkuchen wird mit Wasser neutral gewaschen. Nach dem Trocknen erhält man 33 Teile eines deckenden organgeroten Disazopigments. Fp. : > 360 °C.

Beispiel 8

In eine nach Beispiel 7 aus 16,1 Teilen 3,3',5,5'-Tetrachlorbenzidin erhaltene Tetrazolösung wird eine Lösung von 17,1 Teilen 1,4-Dimethyl-3-cyan-6-hydroxypyridon (2) in 600 Teilen Wasser und 5 Teilen Ätznatron eingetropft.

Nach beendeter Kupplung wird die Pigmentsuspension auf 50 °C erwärmt, abgesaugt und der Preßkuchen mit Wasser neutral gewaschen.

Nach dem Trocknen erhält man das orangerote Bisazopigment gemäß Beispiel 7 in einer transparenteren Form.

Beispiel 9

Eine nach Beispiel 7 aus 16,1 Teilen 3,3',5,5'-Tetrachlorbenzidin erhaltene Tetrazolösung wird zu einer Lösung aus 21,6 Teilen 1-Butyl-2,6-dihydroxy-3-cyan-4-methylpyridin in 300 Teilen Wasser und 4,2 Teilen Natriumhydroxid gegeben. Nach 2 Studen bei 20 °C wird 1 Stunde auf 80 °C erwärmt, abgesaugt und mit warmem Wasser gewaschen. Nach der Trocknung erhält man 37,1 Teile eines orangeroten. Pigments. Fp. : 305 °C.

Anwendungsbeispiele

a) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig

vermischt. Man erhält eine farbstarke, rote Toluol-Tiefdruckfarbe. Die mit dieser Farbe erhaltenen Drucke weisen gute Lichtechtheiten auf.

b) Kunststoff

0,05 Teile Farbstoff, erhalten nach Beispiel 1, werden mit 50 Teilen einer Mischung aus 65 Teilen Polyvinylchloridpulver, 35 Teilen Diethylhexylphthalat und 2 Teilen Dibutyl-zinn-bis-thioglykolsäurehexylester auf einem Mischwalzwerk bei 150 bis 160 °C homogenisiert (ca. 8 Minuten), zu Fellen gewalzt und auf einem Kalanderwalzwerk geglättet. Man erhält brillante, rot gefärbte Felle mit ausgezeichneter Weichmacherechtheit.

**Patentansprüche**

1. Verbindungen der allgemeinen Formel I

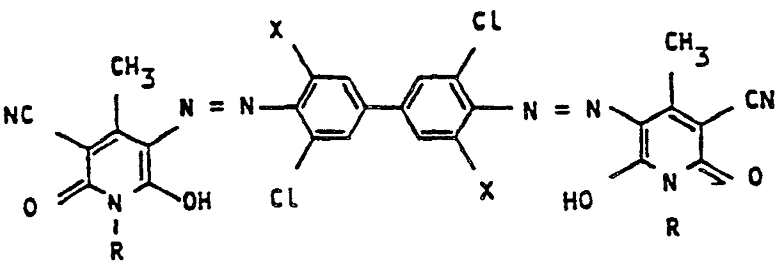

(I)

in der R Wasserstoff oder $C_1$- bis $C_6$-Alkyl und X Chlor oder Brom sind mit der Maßgabe, daß wenn R = H, X nur Brom ist.

2. Die Verbindung gemäß Anspruch 1, wobei R = H und X = Br sind.

3. Die Verbindung gemäß Anspruch 1, wobei R = $CH_3$ X = Cl sind.

4. Die Verwendung der Verbindungen gemäß Anspruch 1 als Pigmente, insbesondere in Druckfarben oder zum Färben von Kunststoffen.

**Claims**

1. A compound of the general formula I

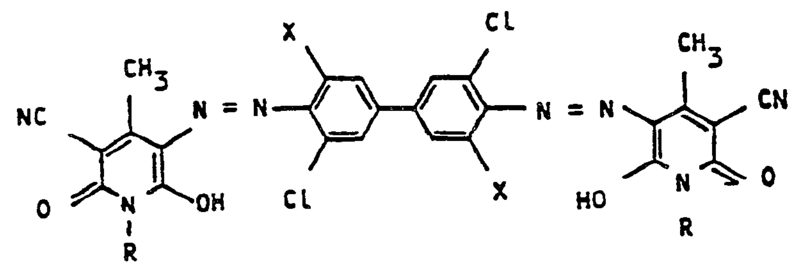

(I)

where R is hydrogen or $C_1$-$C_6$-alkyl and X is chlorine or bromine, with the proviso that X is only bromine when R is H.

2. A compound as claimed in claim 1, wherein R is H and X is Br.

3. A compound as claimed in claim 1, wherein R is $CH_3$ and X is Cl.

4. The use of a compound as claimed in claim 1 as a pigment, especially as a pigment in printing inks or for colouring plastics.

**Revendications**

1. Composés de formule générale I

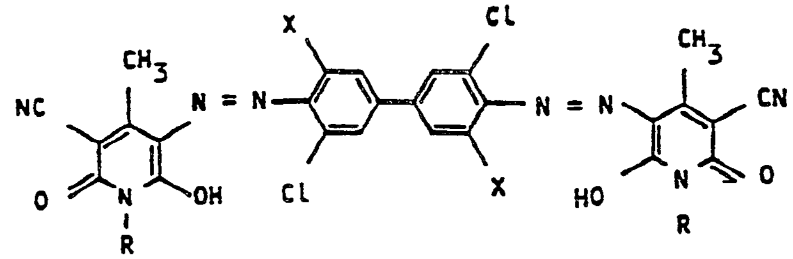

(I)

dans laquelle R est un atome d'hydrogène ou un radical alkyle en $C_1$ à $C_6$ et X est un atome de chlore ou de brome, avec cette condition que dans R = H, X ne peut être qu'un atome de brome.

2. Composé selon la revendication 1, dans lequel R = H et X = Br.

3. Composé selon la revendication 1, dans lequel $R = CH_3$ et X = Cl.

4. Utilisation des composés selon la revendication 1 comme pigments, en particulier dans des encres d'imprimerie ou pour la coloration de matières plastiques.